# EUROPEAN PATENT SPECIFICATION

(11) **EP 1 621 442 B1**
(45) Date of publication and mention of the grant of the patent: **14.05.2008**
(21) Application number: 05405426.7
(22) Date of filing: 06.07.2005
(51) Int. Cl.: B62D 1/06, B60Q 1/00, B62K 11/14, B62K 21/26, B62K 23/02

(54) **Steering control for self-propelled vehicles**
Lenksteuerung für selbstbewegende Fahrzeuge
Contrôle de direction pour véhicules automobiles

(30) Priority: 29.07.2004 CH 12752004; 15.02.2005 CH 2562005
(43) Date of publication of application: 01.02.2006
(73) Proprietor: Aphrodite Agencies Limited, St. Hhelier Jersey JE1 1BG (GB)
(72) Inventor: Rubboli, Gian Mario, 20127 Milano (IT)
(74) Representative: Gaggini, Carlo

(56) References cited:
- EP-A- 1 216 911
- EP-A- 1 391 366
- DE-A1- 4 200 642
- DE-A1- 10 311 895
- DE-C- 841 273
- US-A- 2 945 099
- US-A- 3 585 626
- PATENT ABSTRACTS OF JAPAN vol. 016, no. 103 (M-1221), 13 March 1992 (1992-03-13) -& JP 03 279074 A (TOYODA GOSEI CO LTD), 10 December 1991 (1991-12-10)

## Description

The present invention concerns a steering control for self-propelled vehicles, such as motorcycles, automobiles, etc., according to the preamble of the claim 1.

A steering control device of the type mentioned is described in detail in the EP-1216911A2 filed by the same applicant. This preceding patent application thus constitutes a state of the art pertaining to the present invention, which aims at presenting an improvement of the same. The entire contents of the EP-1216911A2 thus is integrated into the description of the present patent application.

The EP-1216911A2 describes and shows a steering control in of a steering wheel of an automobile, or of a handlebar of a motor cycle, provided with a gripping zone of elastically variable geometry, inside which a pneumatic, or a hydraulic, sensor is located, which reacts to changes o the form and/or to the volume of the gripping zone. The sensor according to the invention is connected to at least one control element and/or to a device monitoring the functionality of the vehicle in such a manner that the safety control device is activated by the reaction of the sensor.

Practical realisation of the concept described in the EP-1216911A2 led to the experience that this concept calls for improvements that considerably increase the driving safety of the vehicle. Such improvements thus are the objective of the present invention.

A first finding from practical experience indicates that only pneumatic sensors, and still better, hydraulic sensors, present reliable functionality as they permit - other than the ones using electrical micro-switches reacting to elastic deformation of the steering control, as already known from the general state of the art - picking up an analogue signal of the pressure exerted by the hand onto the steering wheel or onto the handlebar. A signal of this type presents the great advantage over a signal of digital open/closed type emitted by an electric switch, of reproducing in simple but correct form - without complex electronic devices - the quality of the reactions of the driver, which means that the degree of his fear or his panic induced by unexpected and unforeseeable situations he finds himself exposed to.

The document JP 03279074A (See Patent Abstract of Japan, vol. 016, Nr(M-1221.) by TOYODA GOSEI CO LTD describes a steering control for self-propelled vehicles, such as motorcycles, automobiles, etc. with a gripping zone, which for driving is held by at least one hand of the driver, in which arrangement the gripping zone is provided with an elastically variable geometrical shape in such a manner that, if the pressure exerted by the hand, or the fingers respectively, of the driver increases, its shape changes and/or its volume decreases, and in which inside the gripping zone a hydraulic or pneumatic sensor (8) is provided, which reacts to deviations of the shape and/or of the volume of the gripping zone, and in which the sensor furthermore is connected to at least one control and/or monitoring element for the operation of the vehicle, which thus is activated by the reaction of the sensor, and in which the hydraulic or pneumatic sensor extends over essentially the whole zone of the steering control, which can be contacted by at least one hand of the driver of the vehicle, and which consists of a tube of elastic material filled with a fluid, and embedded essentially totally in a foamed plastic material.

The objective of the present invention, just as the one of the EP-1216911A2 and of theJP 03279074A, is to create a steering control for vehicles, which is capable of improving the preventive and active safety of the driver of the vehicle, as well as of the other users of the road - pedestrians in particular - owing to the considerable reduction in the reaction time lag of the driver, and correspondingly shortening the length of the braking distance. A few meters difference in the braking distance can prove vital in avoiding a crash, or in reducing the effects of a crash. This is confirmed every day on the road. On the other hand it is known that in the case of unexpected danger situations (pedestrians or animals unexpectedly crossing the road, obstacles appearing suddenly after a curve, sudden left turns by a cyclists, etc.) the driver, according to a first form of reaction, instinctively tends to grip the wheel or the handlebar with greater or lesser force and speed in function of the degree of panic he suffers. Another form of reaction, often seen in practical traffic, and differing from the one of gripping the wheel or the handlebar descried above, is the one of leaning with both hands onto the rim of the steering wheel, pressing both palms hard against it. This is an instinctive and most rapid reaction aimed at protecting the thorax region from impacting the wheel in case of brisk deceleration of the vehicle for any reason, e.g. because of an obstacle - a pedestrian - seen suddenly in front of the vehicle. The hands in this case press hard, with strong force corresponding to an acceleration of 2 to 3 G, against the upper surface of the steering wheel rim oriented towards the driver, and this force inventively can be made use of for activating a pneumatic or hydraulic sensor located in the upper portion of the rim of the steering wheel. Thus, thanks to the hydraulic or pneumatic sensor, the possibility of obtaining a signal proportional to the driver's perception of danger, i.e. a signal constituting a noticeable progress over all sensors operating with a simple electrical switch, which can only give off on/off signals that do not account for the speed of the driver's reaction nor for the force of his reaction or, respectively, for his "degree of panic".

A second aspect revealed in practical application of the known solutions is that the whole extent of the steering control (i.e. the whole circumference of the steering wheel in the case of an automobile, or the whole length of the handlebar, in the case of vehicle with a handlebar) is to be used as an activating zone for the hydraulic or pneumatic sensor. Expressed in other words: Practical use has shown that, while driving a vehicle, the driver tends to shift his hand - or both his hands, if he applies them both - along the whole surface of the rim of the steering wheel or, respectively, along the whole length of the handlebar. Thus it never can be known precisely, where the hand or the hands of the driver contact or hold the steering control. Of course there are favoured zones, such as the two sides to the right or to the left hand side, or the upper and the lower zone of the steering wheel rim. But it is impossible to foresee precisely at which point the driver, in an emergency or panicking situation, will grip the wheel or the handlebar. For this reason the **known** solutions cannot entirely satisfy the conditions for effectiveness required for a safety device such as the one considered here.

It is the objective of the present invention to eliminate the disadvantages cited above still inherent in the state of the art, represented in particular by the JP-03279074A**,** and to offer the market a solution, which ensures maximum effectiveness in all panic situations of the driver, independently of his driving habits, in particular of his way of holding the steering wheel while driving.

This objective is met thanks to a steering control presenting the characteristics according to the characterising portion of the claim 1.

Owing to the application of at least **two** hydraulic or pneumatic sensors extending essentially over the whole zone of the steering control that may be gripped by at least one hand of the driver of the vehicle, the steering control being the steering wheel of an automobile or the handlebar of a motorcycle, best assurance is obtained that **one of** the sensors can be activated securely, whatever the situation is. For obtaining this result at least **two** sensors **are** provided, which **are** hydraulic or a pneumatic sensors - being able to transmit an increase in pressure at any of its points to a receiving device provided with **them** - consisting, **as known,** of a tube of elastic material immersed in expanded foam plastic material, the final elasticity of which (i.e. after hardening of the material) preferably is lower than the elasticity of the material forming the tube. Owing to this characteristic the pressure exerted by the hands (or by one hand only) onto the plastic foam material completely surrounding the tube of the sensor (forming the rim of the steering wheel or the cylindrical body of the handlebar) is immediately transmitted to **one of** the tubes, which in turn transmits it to the fluid contained in the tube, in such a manner that the pressure increases inside the tube. The signal receiver in the form of a pressure gauge, the pressure value being determined with an analogue electric measuring device, and the signal emitted immediately can be processed in many different modes (start of the braking action, switching on of warning lights, etc.) which, however, are apt to reduce the dangers generated by the panic situation causing the driver's brisk reaction. It is to be stressed that the pressure gauge can be calibrated in such a manner that it emits a signal only if he pressure increase in the sensor-tube exceeds a predetermined value, in order to avoid undesired reactions of the system due to mere inattentiveness of the driver.

The depending claims 2 through **11** concern preferred embodiments of the present invention, which will be described and discussed in more detail with reference to the following description illustrated in corresponding Figures. The Figures show in:
- Fig. 1: steering control **according to the state of the art** in the form of a steering wheel of an automobile shown schematically in a view from below;
- Fig. 2: a cross-section of the rim of the steering wheel along the line I - I in the Fig. 1;
- Fig. 3: the tube-shaped sensor located inside the steering control **according to the** **Fig. 1**;
- Fig. 4: an alternative known arrangement of one of the tube-shaped sensors in a steering wheel of an automobile;
- Fig. 5: a section along a zone of the steering wheel of an automobile, in which the tube-shaped sensor is placed in the outer portion (as shown in the Fig. 4), but with additional support elements against which the tube rests;
- Fig. 6: the inventive steering control equipped with two tube-shaped sensors, one of which is located in the outer rim portion of the wheel, and the other one of which is located in upper portion of the rim of the wheel;
- Fig. 7: a design detail of the solution according to the Fig. 6 showing the manner in which the two sensor tubes merge into one pressure gauge;
- Fig. 8: an alternative design example of a steering wheel in which the polyurethane is rigid and the sensor is placed into a peripheral slot milled into the rim.

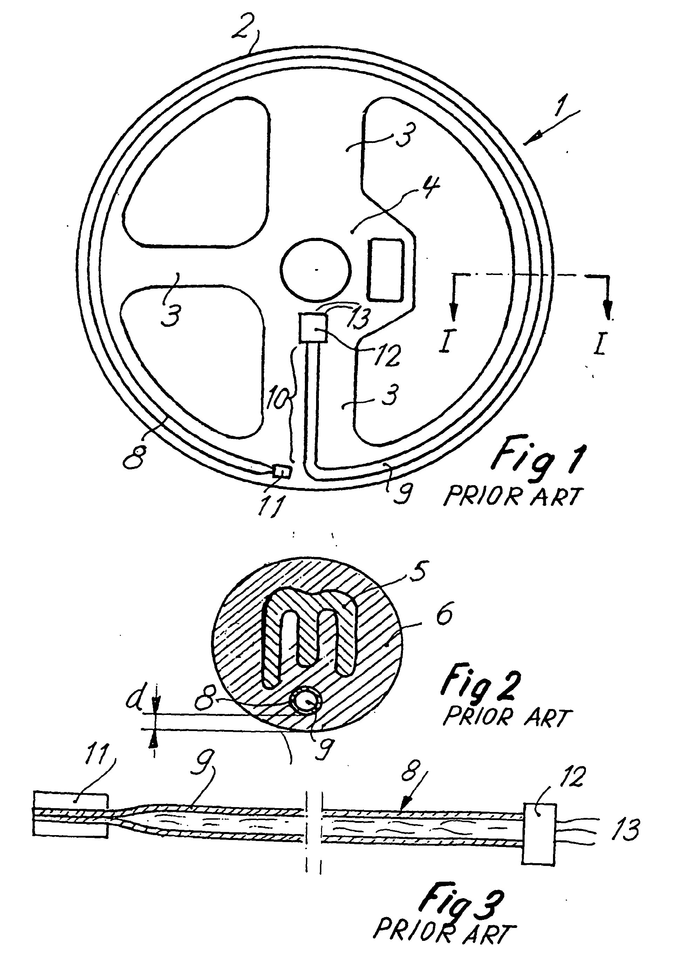

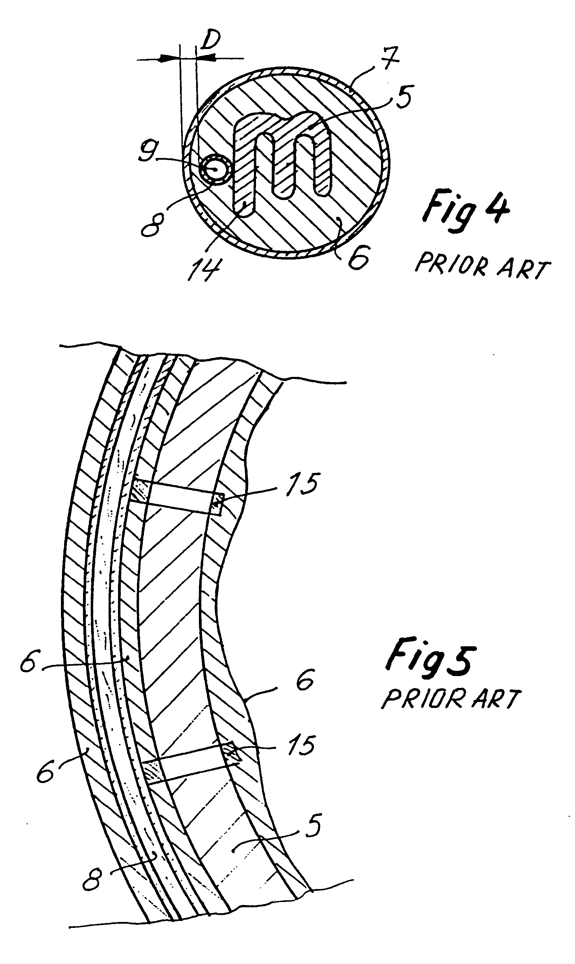

In the Fig. 1 a steering wheel 1 of an automobile is shown schematically, seen from below (i.e. from its lower portion). The steering wheel of conventional type, applied in the automobiles circulating today, comprises a rim 2 and a number of spokes 3 (often two or three spokes) connecting the rim 2 with the steering column 4. The specific layout of the steering wheel 1 (namely the diameter of the rim, the number of spokes, the specific shape of the steering column head 4) plays a minor role within the frame of the invention and thus is not discussed in more detail here. It just is to be noted that modern steering wheels of automobiles as a rule contain a support structure (skeleton) made from light metal alloys (magnesium in particular) for lending the steering wheel the strength required and the indispensable safety characteristics. A skeleton 5 of such type presents an e.g. M-shaped profile (see the Fig. 2, in which the cross-section of the rim of the steering wheel 1 along the line I - I of the Fig. 1 is shown) and of course comprises the spokes 3 and the steering column head 4 (not visible in the figures). The skeleton 5 normally is embedded at least partially, especially in its rim portion, in a plastic foam material of predetermined elasticity, in such a manner that its touch is pleasant and assures good grip. The elasticity of the foam plastic material, plainly visible in the cross-sections in the Figures 2 and 4 and indicated with the reference number 6, plays a particular role within the scope of the present invention, which is to be described later on. In the Fig. 4 it can be seen furthermore that the plastic foam material 6 as a rule is enclosed in a cover 7 of soft leather or half-leather in order to further improve the surface properties of the steering wheel. This does not ply any significant role in practical use, as far as the present invention is concerned.

Of importance is just the fact - actually already present and known in the steering wheels and in the handlebars according to the state of the art - that the material of which the plastic foam material is made from (preferentially made e.g. from expanded polyurethane or from a material presenting characteristics similar to polyurethane) is elastic and can undergo local elastic deformation under the influence of the pressure exerted by a hand that grips the wheel, or exerted just by a finger pressed onto the surface. This local elastic deformation is made use of patent-wise for obtaining the desired safety effect. Mentioning elastic deformation, it is to be defined here that this expression can refer to the local deviation of the form of the gripping zone as well as to the reduction in its volume: both cases can be made use of in practical application, depending on whether the wheel rim is pressed by a hand that grips the wheel, or whether it is pressed just locally. From the viewpoint of the present invention the two cases are entirely equivalent as they generate the same effect, as will be explained later on.

The **state of the art cited shows a** hydraulic or pneumatic sensor 8 extending essentially over the whole zone of the steering control, e.g. of the steering wheel 1, which can be gripped by at least one hand of the driver (not shown). In the case of the **known** specific **case** shown in the Figures 1 through 5 the gripping zone extends essentially over the whole rim 2 of the steering wheel 1, as actually the whole rim 2 can be gripped or be held by the driver. In the case of the handlebar of a motorcycle (not shown) the gripping zone extends over the full length of the handlebar. At whatever point the driver grips or holds the steering control, the safety system thus will function as the hydraulic or pneumatic sensor extends over the full expanse of the gripping zone. In this arrangement the characteristics of a fluid contained in a tube can be made use of: the pressure applied at whatever point of the tube immediately is propagated throughout the tube. The sensor 8 **is e.g.** a tube 9 (see the Fig. 3 especially) of elastic material, filled with a fluid 10 and embedded in foamed plastic material 6 (see the Figures 2 and 4), the final elasticity of the expanded foam material (where the term "final" refers to the elasticity after completion of the hardening phase of the expanded foam material) being equal or lower than the elasticity of the material of which the tube 9 consists. This definition is stated because of the requirement that the tube 9 of the sensor 8 does not oppose any useless resistance against compression from the outside, in order not to render the combination of the foam material 6/tube 9 needlessly inert against pressure loads. The tube 9 thus is not to oppose pressures, but is to transmit them to the fluid 10 that fills the tube and reacts to any, and even smallest, deforming loads acting onto the foam material that surrounds the tube 9.

In the Fig. 1, **which corresponds to the state of the art,** it can be seen in which manner the tube 9 forming the sensor 8 surrounds practically the whole circumference of the steering wheel 1, being placed in the rim in suitable manner, to be described later on, and re-entering towards the steering column 4 via one of the spokes 3, forming a portion curved 90° with respect to the circumference of the rim 2.

**As known from the state of the art,** the tube 9 is sealed tight using a sealing clip 11 at one end, whereas its other end is connected to a pressure gauge with an electrical analogue measuring value transmitter 12, which transmits its signal via suitable circuits 13 to a signal processing unit that processes the signal conveniently, e.g. the on-board computer. Obviously there are other solutions than clips for sealing a tube 9, and also connecting to a tube under pressure a pressure gauge furnishing an analogue electric signal, correspond to the state of the art. All such solutions thus are applicable within the frame of the present invention.

Practical experience **furthermore** has permitted to establish that **preferably** a hydraulic sensor 8 is **chosen**, which consists of a tube 9 as described above, filled with a liquid, which preferentially presents minimum thermal dilatation within the temperature range from - 40°C to + 100°C. The advantage of this solution is self-evident. The liquid is essentially incompressible and thus reacts faster and with higher precision than a pneumatic sensor filled with a compressible gas. The smallest possible thermal dilatation within the range of temperatures cited is desirable, as this permits elimination of possible deviations in pressure occurring in the steering control exposed to outside conditions in the environment. The steering wheel if an automobile must remain functional notwithstanding considerable temperature excursions, such as found between polar and equatorial regions, also if modification of the calibration of the pressure gauge 12 in function of the average temperature at which the automobile is used can be considered.

**As known from the state of the art,** the steering control can be the steering wheel 1 of an automobile (as shown in the Fig. 1) and the hydraulic or pneumatic sensor 8 can be arranged along the whole circumference of the steering wheel 1 (as shown in the Fig. 1)**e.g**. in its lower portion, at a distance d ranging from 1 to 6 mm from the surface of the steering wheel rim 1, thus under the magnesium skeleton 5, is apt to activate the sensor when pressed by a finger or by the hands. Most drivers instinctively grip the wheel 1 laterally with the palm of the hand, in such a manner that the fingers, except the thumb, are placed on the lower portion of the steering wheel rim. If the hand tightens, the fingers tend to press the wheel rim, putting a load onto the material, the filling foam material is made of, upwards from below, and thus the tube 9 of the sensor 8, arranged in that location, is compressed.

According to another **known** variant of realisation of the **steering control,** indicated in the Fig. 4 showing a cross-section of the steering control similar to the one shown in the Fig. 2, the steering control is represented by a steering wheel 1 of an automobile, and the hydraulic or pneumatic sensor 8 is arranged on the outer side along the whole circumference of the steering wheel rim at a distance D ranging from 1 to 6 mm from the surface of the steering wheel 1. It is to be noted that in the form of realisation according to the Fig. 4 the surface of the steering wheel is covered with a thin layer 13 of leather or half-leather, which is provided, on one hand, to protect the expanded plastic foam material 6, and on the other hand to improve the grip on the wheel 1 for the driver. The distance D thus is measured from the outer surface of the cover layer 13.

The advantage of this **known** form of realisation is seen in that the sensor 8 is located in a lateral position of the wheel 1, where it can be strained easily as the driver grips the wheel and tends to pull back his arms.

In the Fig. 4 it also can be seen in which manner the elastic tube 9 of the sensor 8 via its guide element rests directly against one of the vertical protrusions or arms of the support structure 5. This represents an advantageous solution facilitating manufacture of the steering wheel, which does not play any particular role within the scope of the present invention, however.

**A** steering wheel **normally** contains, as shown in the Figures 2, 4 and 5, a support structure or skeleton 5 embedded entirely or partially in the expanded plastic foam material 6, where the structure 5 comprises a steering column head, spokes and a wheel rim (not shown in their details, but corresponding to the steering column head 4, the spokes 3 and the wheel rim 2 of the foam material forming the steering wheel 1) made from light metal alloys, preferentially from magnesium, the tube 9 of the sensor 8 resting against at least one point of the support structure 5. This solution is shown in the Fig. 5, in which support blocks 15 of suitable shape (shown schematically in the Fig. 5) are arranged on the support structure 5, e.g. using normal distancing clips, against which the tube 9 of the sensor 8 rests. This solution proves suitable for facilitating the foam expanding process in the manufacture of the steering wheel 1, i.e. the processing step during which the foam material is brought into the mould at relatively high pressure (e.g. at 5 to 6 kg/cm²), which could cause shifting of the tube 9 with respect to the support structure 5. The support blocks 15 thus serve as a fixation of the position of the tube 9 during this manufacturing step of the steering wheel, ensuring the correct position of the tube 9.

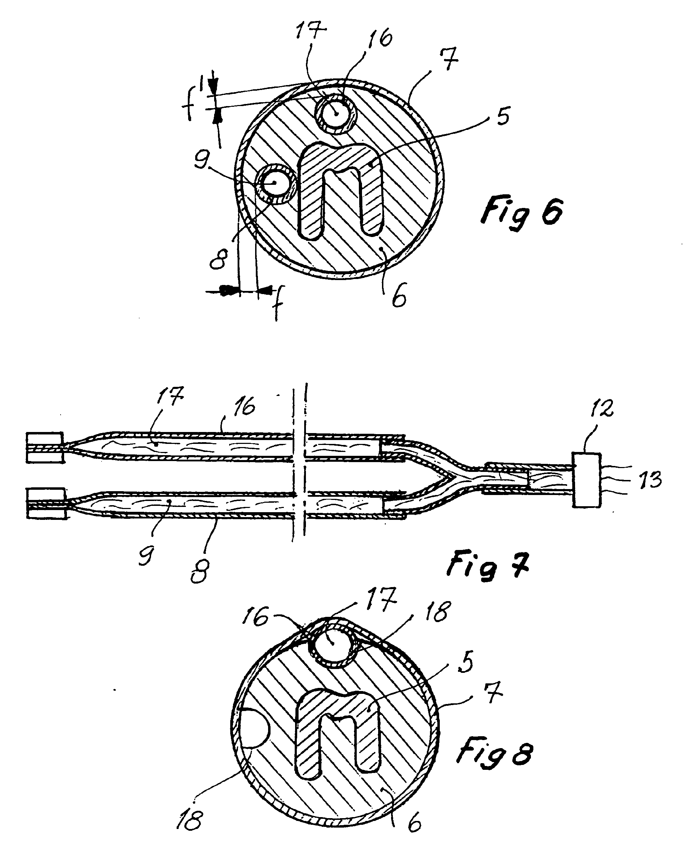

**The present invention now provides that the** two positioning solutions shown in the Figures 2 and 4 can be applied together, as shown in **the** **Figures 6, 7 and 8****,** if two sensors 8, **16** in form of a tube 9, **17** are provided or if just one sensor 8 in form of a tube 9 is provided, which alternatively is placed along the circumference of the steering wheel 1 in the positions indicated in the Fig. 2 and in the Fig. 4, or can change from one position to the other and back according to the zone of the steering wheel concerned. This permits realisation of the advantages mentioned, concerning the various positions of the sensors 8 and 16 at the same time.

According to a preferred form of realisation of the present invention it furthermore is provided that the tube 9, or 17 respectively, presents an outside diameter ranging from 2 to 6 mm, and is made from a plastic material such as silicone, EVA (vinyl-ethylene acetate) or a similar material.

**A** preferred form of the present invention is represented finally in the Figures 6 and 7, which show the solution in which **one of** the **two** sensors **8 and** 16 is located in the upper portion of the steering wheel 1, i.e. on the side facing the driver, along its whole circumference. As described before, this solution permits most rapid protective reaction, in particular if the driver, as an unexpected obstacle emerges in front of the vehicle, such as a pedestrian crossing the road without watching the traffic, using both hands pushes hard against the steering wheel in order to protect himself against a seemingly unavoidable collision. This actually is the first instinctive reaction. The sensor 16 thus reacts immediately and activates the predetermined protective measures. The sensor 8 located in the outer portion of the steering wheel 1, in the case of panic, when the driver presses the steering wheel hard with his hands, reacts as described before.

In the **Fig. 7** it is shown in which manner two sensors 8 and 16 can jointly be placed in the rim of the steering wheel, the first sensor e.g. in the outer portion and the second one in the upper portion of the steering wheel. This layout thus permits realisation of a double chance of reaction in one arrangement, and thus permits doubling the degree of safety.

In the Fig. 7 it is shown in which manner the two sensors 8 and 16 merge into one single tube in order to activate one single pressure gauge 12. The advantage of this arrangement is obvious. The tube 17 is located in the rim of the wheel at a distance f ranging from 1 to 6 mm from the surface of the steering wheel.

Another preferred form of realisation provides that, in the preferred case in which a hydraulic sensor is chosen, the filling liquid is glycol, silicon or a similar liquid. This liquid is filled into the tube 9, 17, preferentially under vacuum during the filling process, in such a manner that that absolutely no bubbles remain inside the tube 9, 17. This, however, is a manufacturing problem known to any specialist in the field and is not relevant within the scope of the present invention.

Concerning finally the plastic material forming the outer shape of the steering wheel 1, manufacturing experience has shown that tat among the many possibilities available the one providing the application of an expanded polyurethane foam material presents an ideal solution with respect to the elastic characteristics as well as to the ease of manufacture and to cost efficiency. This material thus represents a preferred choice, not excluding the use of other foam materials that can be injected under pressure, or pressed, into a mould, however.

Everything described here thus far also is valid for steering wheels the foaming process of which determines also the final surface of the polyurethane material with mock leather effects. It has been noted that the manufacture of steering wheels to be covered consecutively with genuine leather (which operation is called "saddlery" among specialists) preferentially must be effected using a more rigid polyurethane material, which causes major difficulties in the process of inserting the tubes and of the sensors, inventively required, in the foam material insertion into the mould.

In this case the steering wheel (see the Fig. 8) preferably is foamed without previous insertion of the tube or the tubes and later is machined by milling, in order to create the recess or slot 18, into which the inventive tube or the tubes of the sensor or the sensors are placed subsequently. For this purpose a slot 18 preferentially is machined into the circumference of the steering wheel at the preferred location (above, under, outer side, etc.) of essentially semicircular cross-section as shown in the Fig. 8, into which the tube 17 of the sensor fits perfectly. The tube 17 must protrude from the polyurethane surface over just 6 to 8% of its total diameter. This solution is applied only where the relative hardness of the polyurethane precludes sufficient elastic local deformation of the tube.

The advantages of the steering control according to the present invention, especially its application in its preferred form of a steering wheel 1 of an automobile can be summarised as follows:
1) Absolute effectiveness and reliability as the **two** danger sensors functions in whatever position the hands of the driver contact the wheel, taking into account also the fact that scientific tests have proven that the hands react faster than the feet, and that thus the safety systems monitoring the hands of the driver, like the one according to the present invention, prove more efficient.
2) The sensors 8, 16 can be provided, if the pressure gauge 12 is calibrated correspondingly, in such a manner that it reacts only and exclusively in case of panic of the driver, i.e. of real emergency situations, thus avoiding unnecessary and potentially dangerous reactions of the system due to awkward operation by the driver.
3) The inventive steering control is easily manufactured at low cost and thus can be incorporated in all types of vehicles, automobiles or motorcycles, including commercial vehicles, road safety thus being much enhanced.

### List of the Elements Referred to in the Figures

- 1: Steering wheel
- 2: Rim of the steering wheel
- 3: Spoke
- 4: Steering column head
- 5: Support structure (skeleton)
- 6: Expanded foam material
- 7: Leather cover
- 8: Hydraulic or pneumatic sensor
- 9: Tube
- 10: Fluid
- 11: Sealing Clip
- 12: Pressure gauge and transmitter for measured electrical analogue signals
- 13: Circuits
- 14: Vertical protrusion or arm of the support structure 5
- 15: Support block
- 16: Hydraulic or pneumatic sensor
- 17: Tube
- 18: Recess, slot

## Claims

1. Steering control for self-propelled vehicles, such as motorcycles, automobiles, etc., with a gripping zone, which for driving is held by at least one hand of the driver, in which arrangement the gripping zone is provided with an elastically variable geometrical shape in such a manner that, if the pressure exerted by the hand, or of the fingers respectively, of the driver increases, its shape changes and/or its volume decreases, and in which inside the gripping zone hydraulic or pneumatic sensors (8; 16) are provided, which reacts to deviations of the shape and/or of the volume of the gripping zone, and in which the sensor furthermore is connected to at least one control and/or monitoring element for the operation of the vehicle, which thus is activated by the reaction of the sensor,
**characterised in that**
at least two hydraulic or pneumatic sensors (8; 16) are provided and extend over essentially the whole zone of the steering control (1), which can be contacted by at least one hand of the driver of the vehicle, and which consist of a tube (9; 17) of elastic material filled with a fluid, and embedded essentially totally in a foamed plastic material (6),

2. Steering control according to the claim 1,
**characterised in that**
the final elasticity of the expanded foam plastic material (6) is equal or lower than the elasticity of the material of which the tube (9; 17) is made.

3. Steering control according to the claim 1,
**characterised in that**
the tubes (9; 17) at one of their ends are sealed tight using a sealing clip (11, 11'), whereas the other end is connected to a pressure gauge and signal transmitter for analogue electric measuring values (12).

4. Steering control according to the claim 1,
**characterised in that**
the sensors (8, 16) are hydraulic sensors and consist of a tube (9; 17) filled with a liquid presenting minimum thermal dilatation over temperatures ranging from - 40**°**C and + 100°C.

5. Steering control according to the claim 1,
**characterised in that**
the steering control is the steering wheel (1) of an automobile and that the hydraulic or pneumatic sensors (8; 16) are arranged extending over the whole circumference of the steering wheel (1) in its lower portion at a distance (f; f) from the surface of the steering wheel (1) ranging from 1 to 6 mm.

6. Steering control according to the claim 1,
**characterised in that**
the steering control is the steering wheel (1) of an automobile and that the hydraulic or pneumatic sensor (16) is arranged extending over the whole circumference of the steering wheel (1) in its upper portion at a distance (f) from the surface of the steering wheel (1) ranging from 1 to 6 mm.

7. Steering control according to the claim 1,
**characterised in that**
the tubes (9; 17) present an outside diameter ranging from 2 to 6 mm and is made from a plastic material such as silicon, EVA (vinyl-ethylene acetate) or from a similar material.

8. Steering control according to the claim 3,
**characterised in that**
the filling liquid is glycol, silicon or a similar liquid.

9. Steering control according to one of the claims 5 through 6,
**characterised in that**
the steering wheel (1) of the vehicle comprises a support structure (5) embedded entirely or partially in the foamed plastic material (6), comprising a steering column head, spokes and a wheel rim, made from light metal alloys, preferentially from magnesium, and that the tube (9, 17) of the sensors (8, 16) rests against at least one point of the support structure (5).

10. Steering control according to the claim 1,
**characterised in that**
the foam plastic material (6) is an expanded polyurethane foam material.

11. Steering control according to the claims 1, 4 and 5,
**characterised in that**
the foam plastic material (6) is a rigid polyurethane foam material, which on its outside is covered with a leather cover (7), and in which, along the circumference of the steering wheel, a slot (18) is provided in the polyurethane foam material (6), into which the hydraulic or pneumatic sensor (16) is placed protruding from the surface of the polyurethane foam material with a portion corresponding to 6 to 8% of the circumference of the tube (17) of the sensor (16).

## Patentansprüche

1. Lenksteuereinrichtung für Fahrzeuge mit Eigenantrieb, wie Motorräder, Kraftfahrzeuge usw., mit einer Griffzone, die zum Fahren von mindestens einer Hand des Fahrers gehalten wird, in welcher Anordnung die Griffzone mit einer elastisch variablen geometrischen Form auf solche Weise versehen ist, dass, wenn der durch die Hand bzw. von den Fingern des Fahrers ausgeübte Druck zunimmt, sich deren Form verändert und/ oder deren Volumen abnimmt, und in welcher innerhalb der Griffzone hydraulische oder pneumatische Sensoren (8; 16) vorgesehen sind, die auf Abweichungen der Form und/oder des Volumens der Griffzone reagieren, und in welcher der Sensor darüber hinaus mit zumindest einem Steuer- und/oder Überwachungselement für den Betrieb des Fahrzeugs verbunden ist, welches somit durch die Reaktion des Sensors aktiviert wird,
**dadurch gekennzeichnet, dass**
zumindest zwei hydraulische oder pneumatische Sensoren (8; 16) vorgesehen sind und sich über im Wesentlichen die gesamte Zone der Lenksteuereinrichtung (1) erstrecken, mit welchen zumindest eine Hand des Fahrers des Fahrzeugs in Kontakt stehen kann, und welche aus einem Rohr (9; 17) aus elastischem Material bestehen, das mit einem Fluid gefüllt und im Wesentlichen vollständig in einem geschäumten Kunststoffmaterial (6) eingebettet ist.

2. Lenksteuereinrichtung nach Anspruch 1,
**dadurch gekennzeichnet, dass**
die abschließende Elastizität des expandierten Kunststoffschaummaterials (6) gleich oder niedriger als die Elastizität des Materials ist, aus dem das Rohr (9; 17) hergestellt ist.

3. Lenksteuereinrichtung nach Anspruch 1,
**dadurch gekennzeichnet, dass**
die Rohre (9; 17) an einem ihrer Enden unter Verwendung einer Abdichtklemme (11, 11') abgedichtet sind, wohingegen das andere Ende mit einem Druckmesser und einem Signaltransmitter für analoge elektrische Messwerte (12) verbunden ist.

4. Lenksteuereinrichtung nach Anspruch 1,
**dadurch gekennzeichnet, dass**
die Sensoren (8, 16) hydraulische Sensoren sind und aus einem Rohr (9; 17) bestehen, das mit einer Flüssigkeit gefüllt ist, die eine minimale Wärmeausdehnung über Temperaturen im Bereich von -40°C und +100°C aufweist.

5. Lenksteuereinrichtung nach Anspruch 1,
**dadurch gekennzeichnet, dass**
die Lenksteuereinrichtung das Lenkrad (1) eines Kraftfahrzeugs ist, und dass die hydraulischen oder pneumatischen Sensoren (8; 16) derart angeordnet sind, dass sie sich über den gesamten Umfang des Lenkrades (1) in seinem unteren Abschnitt in einem Abstand (f; f) von der Oberfläche des Lenkrades (1) im Bereich von 1 bis 6 mm erstrecken.

6. Lenksteuereinrichtung nach Anspruch 1,
**dadurch gekennzeichnet, dass**
die Lenksteuereinrichtung das Lenkrad (1) eines Kraftfahrzeugs ist, und dass der hydraulische oder pneumatische Sensor (16) derart angeordnet ist, dass er sich über den gesamten Umfang des Lenkrades (1) in seinem oberen Abschnitt in einem Abstand (f) von der Oberfläche des Lenkrades (1) im Bereich von 1 bis 6 mm erstreckt.

7. Lenksteuereinrichtung nach Anspruch 1,
**dadurch gekennzeichnet, dass**
die Rohre (9; 17) einen Außendurchmesser aufweisen, der im Bereich von 2 bis 6 mm liegt, und aus einem Kunststoffmaterial, wie etwa Silikon, EVA (Vinylethylenacetat), oder aus einem ähnlichen Material hergestellt sind.

8. Lenksteuereinrichtung nach Anspruch 3,
**dadurch gekennzeichnet, dass**
die Füllflüssigkeit Glykol, Silikon oder eine ähnliche Flüssigkeit ist.

9. Lenksteuereinrichtung nach einem der Ansprüche 5 bis 6,
**dadurch gekennzeichnet, dass**
das Lenkrad (1) des Fahrzeugs eine Trägerstruktur (5) umfasst, die vollständig oder teilweise in dem geschäumten Kunststoffmaterial (6) eingebettet ist, wobei sie einen Lenksäulenkopf, Speichen und einen Radkranz umfasst, die aus Leichtmetalllegierungen, vorzugsweise aus Magnesium, hergestellt sind, und dass das Rohr (9; 17) der Sensoren (8; 16) auf zumindest einem Punkt der Trägerstruktur (5) aufliegt.

10. Lenksteuereinrichtung nach Anspruch 1,
**dadurch gekennzeichnet, dass**
das Kunststoffschaummaterial (6) ein expandiertes Polyurethanschaummaterial ist.

11. Lenksteuereinrichtung nach den Ansprüchen 1, 4 und 5,
**dadurch gekennzeichnet, dass**
das Kunststoffschaummaterial (6) ein starres Polyurethanschaummaterial ist, das an seiner Außenseite mit einer Lederbedeckung (7) bedeckt ist, in welcher, entlang dem Umfang des Lenkrades ein Schlitz (18) in dem Polyurethanschaummaterial (6) vorgesehen ist, in welchem der hydraulische oder pneumatische Sensor (16) platziert ist, wobei er von der Oberfläche des Polyurethanschaummaterials mit einem Abschnitt vorsteht, der 6 bis 8 % des Umfangs des Rohrs (17) des Sensors (16) entspricht.

## Revendications

1. Commande de direction pour des véhicules autopropulsés, tels que des motocyclettes, des automobiles, etc., ayant une zone de préhension qui, pour la conduite, est tenue par au moins une main du conducteur, agencement dans lequel la zone de préhension a une forme géométrique variable élastiquement, de façon à ce que, si la pression appliquée par la main ou les doigts, respectivement, du conducteur augmente, sa forme change et/ou son volume diminue, et dans lequel il y a, à l'intérieur de la zone de préhension, des capteurs (8 ; 16) hydrauliques ou pneumatiques qui réagissent à des déviations de la forme et/ou du volume de la zone de préhension, et dans laquelle le capteur est relié en outre à au moins un élément de commande et/ou de contrôle du fonctionnement du véhicule qui est ainsi activé par la réaction du capteur,
**caractérisée en ce que**
il est prévu au moins deux capteurs (8 ; 16) hydrauliques ou pneumatiques qui s'étendent sur sensiblement toute la zone de la commande (1) de direction, avec laquelle au moins une main du conducteur du véhicule peut être mise en contact et qui consiste en un tube (9 ; 17) de matière élastique emplie d'un fluide, et incorporé sensiblement complètement dans une matière (6) plastique en mousse.

2. Commande de direction suivant la revendication 1,
**caractérisée en ce que**
l'élasticité finale de la matière (6) plastique en mousse expansée est inférieure ou égale à l'élasticité de la matière dont est fait le tube (9 ; 17).

3. Commande de direction suivant la revendication 1,
**caractérisée en ce que**
les tubes (9 ; 17) sont rendus étroitement étanches à l'une de leurs extrémités en utilisant une agrafeuse (11, 11') d'étanchéité, tandis que l'autre extrémité est reliée à une jauge de pression et à un émetteur de signal pour des valeurs (12) analogiques électriques de mesure.

4. Commande de direction suivant la revendication 1,
**caractérisée en ce que**
les capteurs (8 ; 16) sont des capteurs hydrauliques et consistent en un tube (9 ; 17) empli d'un liquide ayant une dilatation thermique minimum sur des températures allant de -40°C à +100°C.

5. Commande de direction suivant la revendication 1,
**caractérisée en ce que**
la commande de direction est le volant (1) de commande d'une automobile, et **en ce que** les capteurs (8 ; 16) hydrauliques ou pneumatiques sont disposés de manière à s'étendre sur toute la circonférence du volant (1) de direction dans sa partie la plus basse, à une distance (f ; f') de la surface du volant (1) de direction allant de 1 à 6 mm.

6. Commande de direction suivant la revendication 1,
**caractérisée en ce que**
la commande de direction est le volant (1) de direction d'une automobile, et **en ce que** le capteur (16) hydraulique ou pneumatique est disposé de manière à s'étendre sur toute la circonférence du volant (1) de direction dans sa partie supérieure, à une distance (f') de la surface du volant (1) de direction allant de 1 à 6 mm.

7. Commande de direction suivant la revendication 1,
**caractérisée en ce que**
les tubes (9 ; 17) ont un diamètre extérieur allant de 2 à 6 mm et sont en une matière plastique telle qu'en silicone, en EVA (acétate de vinyl-éthylène) ou en une matière semblable.

8. Commande de direction suivant la revendication 3,
**caractérisée en ce que**
le liquide de remplissage est du glycol, une silicone ou un liquide similaire.

9. Commande de direction suivant l'une des revendications 5 à 6,
**caractérisée en ce que**
le volant (1) de direction du véhicule comprend une structure (5) de support, incorporée en tout ou partie dans la matière (6) plastique mousse, comprenant une tête de colonne de direction, des rayons et une jante de volant, en alliage en métal léger, de préférence en magnésium, et **en ce que** le tube (9, 17) des capteurs (9, 16) repose sur au moins un point de la structure (5) de support.

10. Commande de direction suivant la revendication 1,
**caractérisée en ce que**
la matière (6) plastique mousse est une mousse de polyuréthane expansé.

11. Commande de direction suivant les revendications 1, 4 et 5
**caractérisée en ce que**
la matière (6) plastique mousse est une mousse de polyuréthane rigide qui, sur son côté extérieur, est recouverte d'une couverture (7) en cuir et dans laquelle, le long de la circonférence du volant de direction, une encoche (18) est ménagée dans la matière (6) de mousse de polyuréthane, dans laquelle le capteur (16) hydraulique ou pneumatique est placé en faisant saillie de la surface de la matière de mousse de polyuréthane par une partie correspondant à 6 à 8 % de la circonférence du tube (17) du capteur (16).
